# EUROPÄISCHE PATENTSCHRIFT

(11) **EP 0 555 723 B1**
(45) Veröffentlichungstag und Bekanntmachung des Hinweises auf die Patenterteilung: **14.10.1998**
(21) Anmeldenummer: 93101550.7
(22) Anmeldetag: 02.02.1993
(51) Int. Cl.: H04L 25/52

(54) **Verfahren und Schaltungsanordnung zum Regenerieren verzerrter und gestörter Digitalsignale in Nachrichtenübertragungsanlagen**
Method and circuit arrangement for regenerating distorted and noisy digital signals in a communications system
Procédé et arrangement de circuit pour régénérer des signaux distordus et bruités dans un système de communication

(30) Priorität: 08.02.1992 DE 4203674
(43) Veröffentlichungstag der Anmeldung: 18.08.1993
(73) Patentinhaber: ALCATEL ALSTHOM COMPAGNIE GENERALE D'ELECTRICITE, 75008 Paris (FR)
(72) Erfinder: Brandes, Manfred, Dr., O-1130 Berlin (DE); Küntzel, Volkmar, O-1500 Potsdam (DE)
(74) Vertreter: Müller, Joachim, Dipl.-Ing.

(56) Entgegenhaltungen:
- DE-A- 3 142 560
- DE-B- 2 152 102
- GB-A- 2 085 268

## Beschreibung

Die Erfindung betrifft ein Verfahren und eine Schaltungsanordnung zum Regenerieren verzerrter und/oder gestörter Digitalsignale, insbesondere PCM-Signale, die vorzugsweise auf Kabeln mit metallischen Aderpaaren oder auf Lichtwellenleitern übertragen werden. Infolge der frequenzabhängigen Leitungseigenschaften werden die Digitalsignale bei der Übertragung gedämpft und verformt. Deshalb ist es erforderlich, in bestimmten Abständen Regeneratoren in den Übertragungsweg einzuschalten, die die ursprüngliche Form der Signale reproduzieren.

Ein Regenerator für digitale Signale besteht üblicherweise aus drei Baugruppen, einem Entzerrerverstärker, an dessen Ausgang, dem sogenannten Erkennungspunkt, eine Taktrückgewinnungsschaltung und eine Impulsregenerierschaltung angeschlossen sind. Der Impulsregenerierschaltung wird zusätzlich der rückgewonnene Bittakt zugeführt. Bei der Impulsregenerierung werden überlagerte Störungen und Verzerrungen des empfangenen Signals unterdrückt, sofern ein ausreichender Nutz-Störabstand gewährleistet ist. Dazu müssen zwei Grundfunktionen durchgeführt werden, eine Amplitudenentscheidung und eine Zeitentscheidung.

Der Nutz-Störabstand und damit die erreichbare Regeneratorfeldlänge bzw. die sich ergebende Fehlerrate sind wesentlich von der Übertragungsfunktion des Entzerrerverstärkers abhängig. Eine geringe Bandbreite des Entzerrerverstärkers bewirkt zwar eine Unterdrückung hoch- und tieffrequenter Störungen, hat aber auch eine Verzerrung des digitalen Nutzsignals zur Folge. Zu unterscheiden sind dabei Verzerrungen durch die obere Bandbegrenzung, die als sogenannte Intersymbolinterferenzen auftreten, und Verzerrungen durch die untere Bandbegrenzung, die zu einer Nullinienverschiebung führen. Es ist allgemein bekannt, durch quantisierte Rückkopplung, bei der zu dem entzerrten Signal ein Korrektursignal addiert wird, diese Verzerrungen in bestimmten Grenzen zu kompensieren, wobei das Korrektursignal aus dem regenerierten Signal abgeleitet wird. Verzerrungen durch die obere Bandbegrenzung können kompensiert werden, indem das regenerierte Signal über ein Netzwerk mit Hochpaßcharakter zurückgeführt wird, Verzerrungen durch die untere Bandbegrenzung werden entsprechend durch Rückführung des regenerierten Signals über ein Netzwerk mit Tiefpaßcharakter kompensiert, vgl. Bennett, W.R.; Davey, J.R.: Data Transmission, McGraw-Hill Book Company, New York, 1965. Diese Netzwerke sind so zu dimensionieren, daß ihre Ausgangszeitfunktion möglichst vollständig die auftretende Verzerrung kompensiert. Infolge von Toleranzen der Kabeldämpfung, der Leitungsübertrager sowie der Entzerrer- und Rückkopplungsnetzwerke und unter Berücksichtigung aller Betriebsbedingungen ist eine vollständige Kompensation der Verzerrungen nur unzureichend zu gewährleisten.

Es ist weiterhin ein Regenerator bekannt, bei dem das Kompensationssignal als Differenz zwischen dem entzerrten Signal und einem bei der Amplitudenentscheidung abgeleiteten Referenzsignal gebildet wird, vgl. DE 31 42 560. Nach Durchlaufen eines Schaltgliedes, das eine Verzögerung des Signals bewirkt, wird das Kompensationssignal zu dem entzerrten Signal addiert. Mit einer solchen Anordnung, die im Schaltglied eine analoge Schaltung mit Tiefpaßcharakteristik enthält, werden nur tieffrequente Verzerrungen kompensiert. Die zweifache Summenbildung im Rückkopplungsweg erfordert jedoch Additions- beziehungsweise Subtraktionsschaltungen sehr hoher Genauigkeit. Dennoch ist eine exakte Kompensation der durch die Leitungsübertrager und durch die RC-Koppelelemente des Entzerrerverstärkers verursachten Verzerrungen unerreichbar. Wird die Verzögerungszeit der Schaltglieder sehr klein gewählt, so wird das entzerrte Signal selbst nahezu vollständig kompensiert, so daß eine Regenerierung kaum noch möglich ist und die unvermeidbaren Fehler der Summenbildung dominieren. Bei großer Verzögerungszeit werden zwischenzeitlich bereits Nullinienverschiebungen wirksam, so daß die erwartete Kompensation der linearen Impulsverzerrungen bei dieser Anordnung ausbleibt.

Eine weitere Anordnung enthält zwei Summierschaltungen, einen Entscheider und anstelle der Schaltglieder eine Verzögerungsstufe, vgl. DE 31 32 972. Für die beiden genannten Anordnungen gilt, daß als Voraussetzung für die gewünschte Arbeitsweise der Grundfunktionen Amplituden- und Zeitentscheidung die obere Bandbegrenzung etwa der höchsten Signalfrequenz entsprechen muß. Bei einer Kabelübertragung wird jedoch der Nutz-Störabstand wesentlich verbessert und damit die Regeneratorfeldlänge vergrößert, wenn in Verbindung mit geeigneten Erkennungsverfahren die obere Bandbegrenzung unter die Hälfte der Bitfrequenz, beispielsweise auf ein Viertel der Bitfrequenz reduziert wird.

Schließlich ist eine Anordnung bekannt, bei der Nullinienverschiebungen eines binären Signals mit Hilfe zweier durch das Nutzsignal gesteuerter Klemmschaltungen für die positive und für die negative Polarität beseitigt werden, vgl. DE 30 07 502. Die Amplitudenbewertung erfolgt durch einen Komparator, dessen Schwellwert der Mittelwert zwischen beiden Klemmpotentialen darstellt. Diese Schaltungsanordnung arbeitet aber nur erfolgreich, wenn bei den Signalen die Zeitdauer zwischen den Polaritätswechseln begrenzt ist, weil somit in der Zeit von einem Klemmvorgang zum folgenden der Betrag der Nullinienverschiebung unzulässig groß geworden ist. Das setzt aber ein Leitungssignal mit entsprechender Redundanz voraus. Desweiteren muß bei dieser Anordnung die obere Bandbegrenzung so hoch liegen, daß die Impulse innerhalb der Bitintervalle nahezu völlig eingeschwungen sind. Das ist bei einer Bandbegrenzung, die mindestens das 0,5 fache der Bitrate beträgt, erfüllt. Unter diesen Voraussetzungen ist aber die erreichbare Regeneratorfeldlänge eingeschränkt.

Der Erfindung liegt die Aufgabe zugrunde, bei der Übertragung von Digitalsignalen auftretende lineare Verzerrungen durch eine unzureichende oder fehlende Übertragung tieffrequenter Spektralanteile und durch überlagerte tieffrequente Störer in ihrer Wirkung bei der Signalregenerierung zu unterdrücken. Um eine möglichst große Regeneratorfeldlänge überbrücken zu können, soll die Signalregenerierung bei einem geringen Nutz-Störabstand erfolgen und auch bei einer Bandbegrenzung, die kleiner als das 0,5 fache der Bitrate ist, realisierbar sein.

Diese Aufgabe wird durch das im Anspruch 1 angegebene Verfahren und durch die im Anspruch 2 beschriebene Schaltungsanordnung gelöst. Das Verfahren bewirkt, daß durch das Festklemmen der Spannung zu Beginn jeder Bitperiode am Erkennungspunkt ein Spannungsverlauf entsteht, aus dem eine Folge dreier Spannungswerte abgeleitet wird, so daß für die Dauer einer Bitperiode einer der Werte "größer als der positive Spannungsschwellwert", "kleiner als der negative Spannungsschwellwert" oder "arithmetischer Mittelwert aus beiden Spannungsschwellwerten" gilt. Aus der Folge dieser Werte wird durch logische Verknüpfung der Wert des Digitalsignals ermittelt, so daß am Ausgang der Schaltungsanordnung ein völlig regeneriertes Signal zur Weiterverarbeitung bereitgestellt wird. Die Regenerierung ist bei sehr niedriger oberer Grenzfrequenz des Entzerrerverstärkers möglich, so daß sehr große Regeneratorfeldlängen überbrückt werden können. Die erforderliche Schaltungsanordnung enthält keine in ihren Frequenzgängen oder in ihrem Zeitverhalten aufeinander abzustimmende Netzwerke, so wie das bei der herkömmlichen Art der Kompensation von Nullinienverschiebungen durch quantisierte Rückkopplung der Fall ist.

Es ist möglich, nach dem angegebenen Verfahren mit weiteren Spannungsschwellwerten auch mehrpegelige Sendesignale eindeutig zu regenerieren.

Die Erfindung wird nachstehend an einem Ausführungsbeispiel erläutert. In der dazugehörigen Zeichnung zeigen:
- Fig. 1: ein Zeitdiagramm der Signalverläufe, und zwar
- Fig. 1a: eine Bitfolge des Digitalsignals,
- Fig. 1b: ein Zeitdiagramm des zugehörigen Spannungsverlaufs am Erkennungspunkt ohne daß die Spannung festgeklemmt wird und
- Fig. 1c: ein Zeitdiagramm des zugehörigen Spannungsverlaufs am Erkennungspunkt mit erfindungsgemäßen Festklemmen der Spannung
- Fig. 2: ein Augendiagramm aus der Überlagerung der Spannungsverläufe am Erkennungspunkt gemäß Fig. 1c
- Fig. 3: ein Blockschaltbild eines Regenerators mit den erfindungswesentlichen Baugruppen und
- Fig. 4: eine Schaltungsanordnung zum Festklemmen des Momentanwertes der Spannung am Erkennungspunkt.

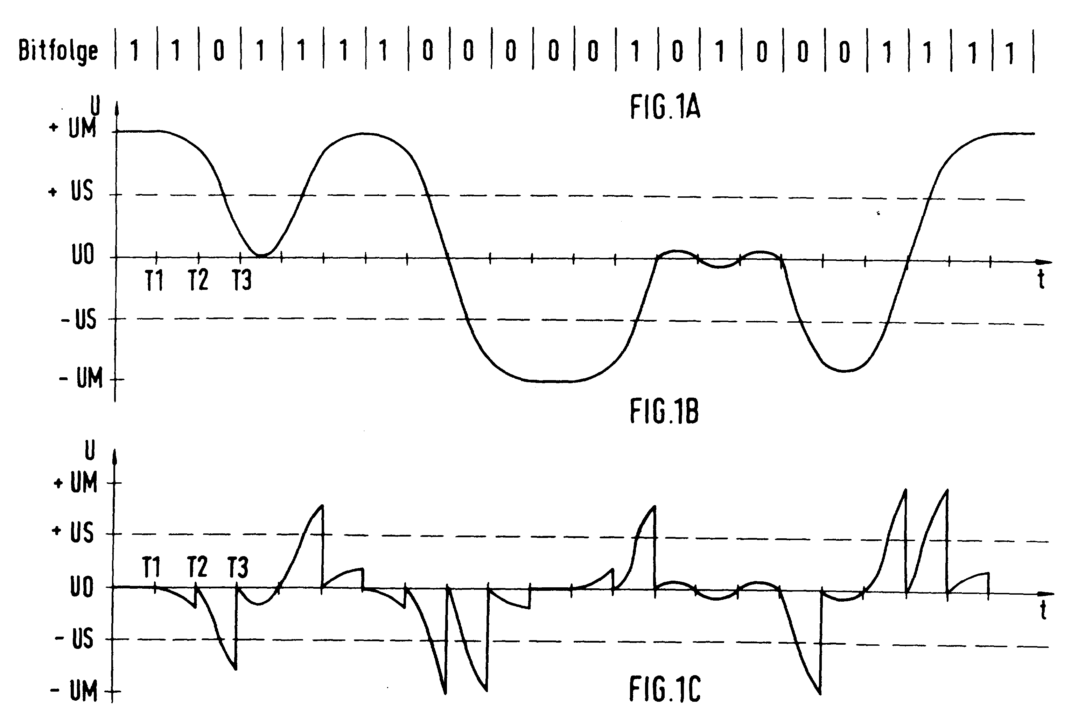

Der in Fig. 1b dargestellte Spannungsverlauf zwischen den Maximalwerten +UM und-UM entsteht unter der Voraussetzung, daß die Entzerrercharakteristik eine sehr niedrige obere Grenzfrequenz, etwa das 0,25fache der Bitfrequenz, hat. Dann sind die Einzelimpulse derart stark verzerrt, daß die Vorderflanke, die Impulskuppe und die Rückflanke jeweils etwa ein Bitintervall breit sind, der gesamte Einzelimpuls sich also über etwas mehr als drei Bitintervalle erstreckt.

Gemäß Fig. 1c entstehen aus dem zweiwertigen Digitalsignal nach dem Festklemmen der Spannung jeweils zu Beginn eines Bitintervalls T1, T2, T3 ... auf den Referenzspannungswert UO drei mögliche charakteristische Spannungsverläufe, nämlich entweder ein über den positiven Spannungsschwellwert +US ansteigender Verlauf oder ein unter den negativen Spannungsschwellwert -US abfallender Verlauf oder ein wenig von dem Referenzspannungswert U0 abweichender Verlauf.

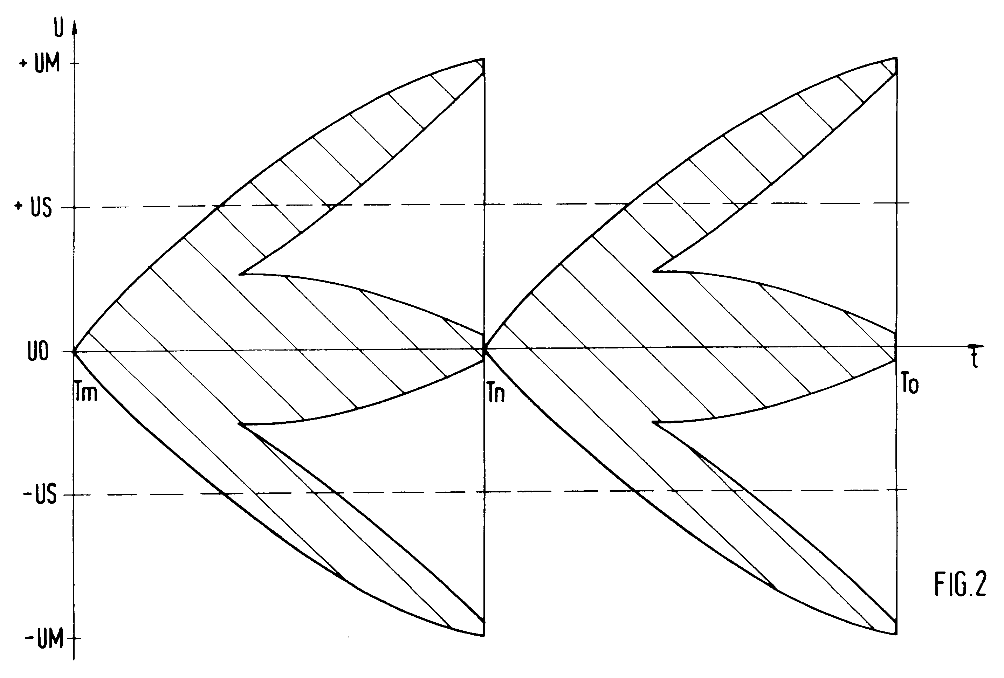

Im Augendiagramm gemäß Fig. 2 sind alle möglichen Zeitverläufe der Spannungen am Erkennungspunkt EP als Flächen im Bitraster dargestellt, die unter Berücksichtigung von Entzerrergrenzfrequenz und Toleranzen vom Spannungsverlauf beschrieben werden und zur Unterscheidung der Signalzustände herangezogen werden können. Die Differenz der Amplituden wird als Augenöffnung bezeichnet. Die große Augenöffnung zu den Abtastzeiten Tm, Tn, To ist ein Maß für einen großen Nutz-Stör-Abstand und damit für eine eindeutige Impulserkennung. Der zur Abtastzeit Tm, Tn, To durch die Amplitudenentscheidung ermittelte Wert wird zwischengespeichert und mit dem Wert einer der vorhergehenden Bitperioden logisch verknüpft. Aus der Folge der drei möglichen Werte bei der Amplitudenentscheidung gemäß Fig. 1c wird nach folgender Regel auf die ursprünglichen Digitalsignale geschlossen:
- ein Momentanwert der Spannung größer als +US entspricht einer logischen Eins,
- ein Momentanwert der Spannung kleiner als -US entspricht einer logischen Null,
- ein Momentanwert der Spannung zwischen +US und -US entspricht einer logischen Eins, wenn zweit Bit zuvor ebenfalls eine logische Eins erkannt wurde und entspricht einer logischen Null, wenn zwei Bit zuvor eine logische Null erkannt wurde.

Durch das Festklemmen der Spannung nach erfolgter Amplitudenbewertung wird für das nachfolgende Bitintervall am Erkennungspunkt EP wieder der gleiche Ausgangszustand wie bei dem vorangegangenen Bitintervall hergestellt. Bei vernachlässigbarer Festklemmzeit wird der Signalverlauf innerhalb eines Bitintervalls vollständig für die Signalerkennung ausgenutzt. Signalverzerrungen durch Nullinienverschiebungen und tieffrequente Störer wirken hingegen nur mit ihrer relativ kleinen Änderung ihres Spannungsverlaufs innerhalb eines Bitintervalls. Bei einem herkömmlichen Regenerator ist ihre Wirkung durch den Spitze-Spitze-Wert des ungünstigsten Falles der Überlagerung aller möglichen Impulsmuster gegeben. Daraus folgt für die erfindungsgemäße Lösung eine wesentliche Reduzierung des Störeinflusses von Nullinienverschiebungen und tieffrequenten Störern.

Bei nicht zu vernachlässigender Festklemmzeit wird sowohl die Amplitude des Nutzsignals am Erkennungspunkt EP als auch die Amplitude der überlagerten Störungen vermindert. Dabei bleibt aber der Nutz-Stör-Abstand annähernd konstant, so daß keine wesentliche Verschlechterung der Übertragungsqualität eintritt.

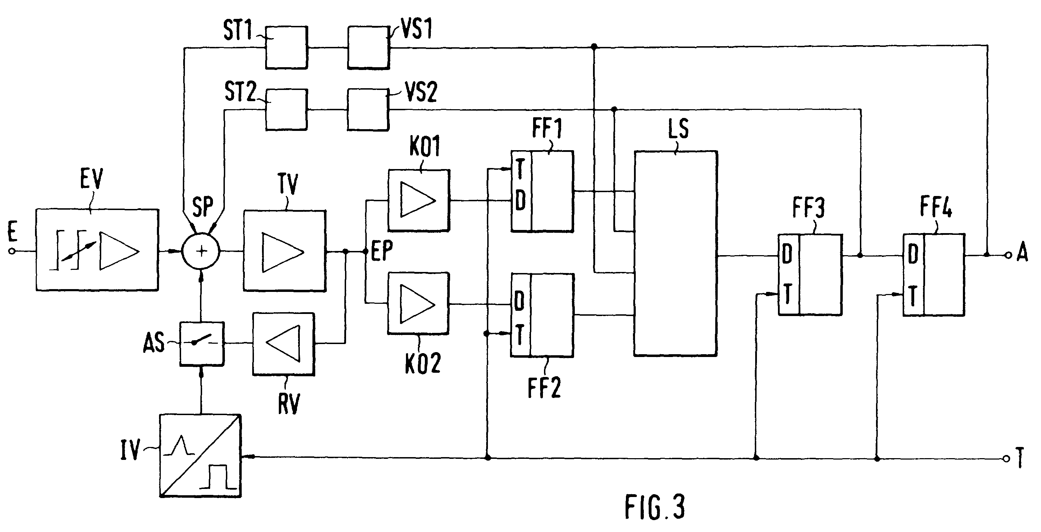

Gemäß Fig. 3 besteht der erfindungsgemäße Teil des Regenerators im wesentlichen aus einem dem Entzerrerverstärker EV nachgeschalteten Treiberverstärker TV, zwei Komparatoren K01, K02, zwei taktflankengesteuerten Flip-Flops FF1, FF2, einer Logikschaltung LS und einem zweistufigen Schieberegister FF3, FF4 sowie einem Rückkopplungszweig aus Rückkopplungsverstärker RV, Abtastschalter AS und Impulsformer IV. Bei weiterer Ausgestaltung der Lösung wird der Regenerator durch zwei Verzögerungsschaltungen VS1, VS2 mit zwei Stromteilern ST1, ST2 ergänzt.

Im folgenden wird die Wirkungsweise der Schaltungsanordnung beschrieben. Das am Eingang E des Entzerrerverstärkers EV liegende Digitalsignal wird nach erfolgter Verstärkung und Entzerrung über einen Summierpunkt SP dem Treiberverstärker TV zugeführt, dessen Ausgang der sogenannte Erkennungspunkt EP ist. An den Summierpunkt SP wird zeitgetaktet ein weiteres Signal gelegt, das vom Signal am Erkennungspunkt EP abgeleitet wird. Es gelangt vom Erkennungspunkt EP über den Rückkopplungsverstärker RV zu dem Abtastschalter AS, der im Rhythmus des Bittaktes T vom Ausgangssignal des Impulsformers IV periodisch geöffnet wird, und von dort zum Summierpunkt SP. Während einer im Vergleich zur Bitperiode kurzen Öffnungsdauer des Abtastschalters AS wird kurzzeitig ein Regelkreis geschlossen, durch dessen hohe Kreisverstärkung die Ausgangsspannung am Erkennungspunkt EP auf dem Referenzspannungswert U0 eingeregelt und zu Beginn des Sperrzustandes des Abtastschalters AS definiert festgeklemmt wird. Anschließend werden alle Änderungen des Digitalsignals am Ausgang des Entzerrerverstärkers EV durch den Treiberverstärker verstärkt. Zwei Komparatoren K01, K02 bewirken die Amplitudenentscheidung, indem mit ihrem jeweiligen Spannungsschwellwert +US und -US das Signal am Erkennungspunkt EP bewertet wird. Die Zeitentscheidung erfolgt mittels der den Komparatoren K01, K02 nachgeschalteten taktflankengesteuerten Flip-Flops FF1, FF2 unmittelbar vor dem erneuten Öffnen des Abtastschalters AS. In der folgenden Logikschaltung LS werden die Ausgangssignale dieser Flip-Flops FF1, FF2 mit den Ausgangssignalen der ersten und zweiten Stufe eines Schieberegisters FF3, FF4 entsprechend der zuvor beschriebenen Regel verknüpft. In dem Schieberegister FF3, FF4 sind die von der Logikschaltung LS ausgegebenen regenerierten Signale der vorangegangenen zwei Bitintervalle zwischengespeichert.

Es ist möglich, von den Ausgängen der Schieberegisterstufen FF3, FF4 über jeweilige Verzögerungsschaltungen VS1, VS2 und Stromteiler ST1, ST2 zusätzliche quantisierte Rückkopplungen zum Summierpunkt SP vorzunehmen. Die Verzögerungsschaltungen sind so dimensioniert, daß die quantisierte Rückkopplung nach dem Festklemmen der Spannung aber noch vor der nächsten Zeitentscheidung wirksam wird. Durch die Überlagerung des Rückkopplungssignals mit dem Signal am Erkennungspunkt EP werden noch vorhandene Intersymbolinterferenzen herrührend von den Rückflanken der Digitalsignale kompensiert. Damit ist es möglich, am Erkennungspunkt EP zu den Abtastzeitpunkten Tn, Tm, To im Augendiagramm gemäß Fig. 2 nahezu vollständig geöffnete Augen zu erhalten.

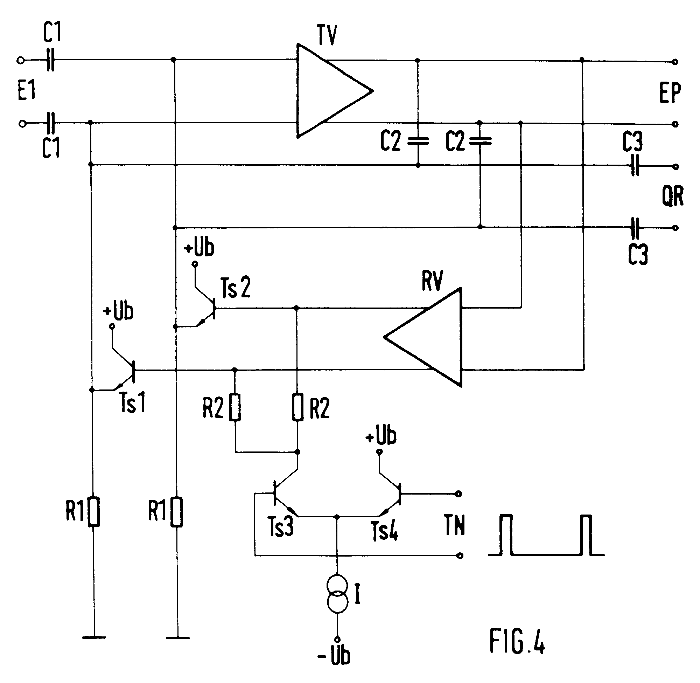

In Fig. 4 sind Einzelheiten der Schaltungsanordnung zum Festklemmen des Momentanwertes der Spannung am Erkennungspunkt EP dargestellt. Als Abtastschalter AS dienen zwei Emitterfolger mit je einem Transistor Ts1, Ts2 und dem jeweils zugehörigen Emitterwiderstand R1 und Basiswiderstand R2. Beide Basiswiderstände R2 sind mit einem Differenzverstärkertransistor Ts3 verbunden, der zusammen mit einem weiteren Transistor Ts4 und einer Konstantstromquelle 7 einen Differenzverstärker bildet. Dieser Differenzverstärker wird am Eingang TN von Taktnadelimpulsen angesteuert. Während der Impulspausen ist der Differenzverstärkertransistor Ts3 leitend, so daß durch den über die Basiswiderstände R2 fließende Strom Sperrpotential an den Transistoren Ts1, Ts2 der Emitterfolger liegt. Damit ist der Regelkreis vom Erkennungspunkt EP über den Rückkopplungsverstärker RV gesperrt. Für die Zeitdauer der kurzen Taktnadelimpulse wird der Differenzverstärkertransistor Ts3 gesperrt, die Transistoren Ts1 und Ts2 der Emitterfolger öffnen und über den somit geschlossenen Regelkreis mit hoher Regelkreisverstärkung wird am Erkennungspunkt EP der Referenzspannungswert U0 eingestellt. Wenn die Transistoren Ts1, Ts2 der Emitterfolger anschließend wieder sperren, halten Kondensatoren C1, C2, C3 das Potential am Eingang des Treiberstärkers TV und damit am Erkennungspunkt konstant, wenn sich das Eingangssignal E1 des Treiberverstärkers TV und das Signal der quantisierten Rückkopplung QR nicht ändern würden. Jede Änderung dieser Signale wird mit den Verstärkungsfaktoren C1/C2 beziehungsweise C3/C2 auf den Erkennungspunkt EP übertragen. Das durch die Taktnadelimpulse gesteuerte Festklemmen des Momentanwertes der Spannung U am Erkennungspunkt EP auf den Referenzspannungswert U0 stellt am Anfang jedes Bitintervalls am Treiberverstärker TV immer den gleichen Ausgangszustand her. Die symmetrische Anordnung der Transistoren Ts1, Ts2 der Emitterfolgen mit den Emitterwiderständen R1 und den Basiswiderständen R2 bewirkt, daß die Taktnadelimpulse selbst kompensiert werden und am Erkennungspunkt nicht erscheinen.

## Patentansprüche

1. Verfahren zum Regenerieren verzerrter und gestörter Digitalsignale in Nachrichtenübertragungsanlagen, bei denen die Digitalsignale am Ausgang eines Entzerrerverstärkers (EV), dem Erkennungspunkt (EP), einer Amplitudenentscheidung durch Vergleich der Digitalsignale mit festen Spannungsschwellwerten (+US, -US) und einer Zeitentscheidung zu jeweils festen durch einen Bittakt bestimmten Zeiten (T1, T2, T3 ...) unterzogen werden, **dadurch gekennzeichnet,** daß zeitlich nach jeder erfolgten Amplitudenentscheidung und Zeitentscheidung der Momentanwert der Spannung (U) am Erkennungspunkt (EP) auf einen definierten Referenzspannungswert (UO) festgeklemmt wird und damit in jeder Bitperiode der zeitliche Spannungsverlauf an diesem Referenzspannungswert (UO) beginnt und daß nach Ablauf einer Bitperiode eine Amplitudenentscheidung durch Vergleich des Momentanwertes der Spannung (U) mit symmetrisch zum Referenzspannungswert (UO) liegenden Spannungsschwellwerten (+US, -US) und eine Zeitentscheidung getroffen wird und daß die bei der Amplitudenentscheidung ermittelten Vergleichsergebnisse gespeichert werden und daß das aktuelle Vergleichsergebnis mit mindestens einem in den zeitlich davor liegenden Bitperioden ermittelten Vergleichsergebnis logisch verknüpft und daraus der Wert des jeweils gesendeten Digitalsignals erkannt wird.

2. Schaltungsanordnung zur Durchführung des Verfahrens gemäß Anspruch 1, bei der das Digitalsignal am Eingang eines Entzerrerverstärkers (EV) liegt, dadurch gekennzeichnet, daß dem Entzerrerverstärker (EV) ein Treiberverstärker (TV) nachgeschaltet ist, dessen Ausgang (EP) mit dem Eingang eines Rückkopplungsverstärkers (RV) verbunden ist und der Ausgang des Rückkopplungsverstärkers (RV) über einen Abtastschalter (AS) zu einem Summierpunkt (SP) am Eingang des Treiberverstärkers (TV) rückgekoppelt ist und daß ein Steuereingang des Abtastschalters (AS) an den Ausgang eines vom Bittakt (T) gesteuerten Impulsformers (IV) geschaltet ist und daß der Ausgang des Treiberverstärkers (TV) weiterhin mit einem ersten Komparator (K01) und einem zweiten Komparator (K02) verbunden ist, deren jeweiliger Ausgang auf einen vom Bittakt (T) getaktetes erstes und zweites Flip-Flop (FF1, FF2) geschaltet ist, deren Ausgänge mit den Eingängen einer Logikschaltung (LS) verbunden sind und daß der Ausgang der Logikschaltung (LS) an ein mindestens einstufiges Schieberegister (FF3, FF4) geschaltet ist, wobei die Ausgänge der Schieberegisterstufen jeweils auf einen Eingang der Logikschaltung (LS) rückgeführt werden und ein Ausgang des Schieberegisters (A) auch Ausgang der Schaltungsanordnung ist.

3. Verfahren nach Anspruch 1, dadurch gekennzeichnet, daß der Referenzspannungswert (U0) in der Mitte des Aussteuerbereichs des Treiberverstärkers (TV) liegt.

4. Verfahren nach Anspruch 1, dadurch gekennzeichnet, daß die Dauer des Klemmvorganges und die Dauer der Zeitentscheidung im Vergleich zur Bitperiode vernachlässigbar gering sind.

5. Verfahren nach Anspruch 1, dadurch gekennzeichnet, daß bei der Amplitudenentscheidung jeweils eines von drei Ergebnissen auftritt, nämlich Momentanwert der Spannung (U) größer als der positive Spannungsschwellwert (+US), kleiner als der negative Spannungsschwellwert (-US) oder zwischen positivem (+US) und negativem (-US) Spannungsschwellwert.

6. Schaltungsanordnung nach Anspruch 2, dadurch gekennzeichnet, daß die Ausgänge der Schieberegisterstufen (FF3, FF4) jeweils über eine Verzögerungsschaltung (VS1, VS2) und eine Stromteilerschaltung (ST1, ST2) mit dem Summierpunkt (SP) am Eingang des Treiberverstärkers (TV) verbunden sind.

## Claims

1. Method of regenerating distorted and noisy digital signals in communication systems, in which the digital signals at the output of an equalizer amplifier (EV), the recognition point (EP), are subjected to an amplitude decision by being compared with fixed voltage-threshold values (+US, -US), and to a time decision at times (T1, T2, T3, ...) fixed in each case and determined by a bit-rate clock,
characterized in that, chronologically, after each amplitude decision and time decision carried out, the instantaneous value of the voltage (U) at the recognition point (EP) is clamped to a defined reference-voltage value (UO) and consequently, in each bit period, the voltage curve with respect to time begins at said reference-voltage value (UO), in that, at the end of a bit period, an amplitude decision is made by comparing the instantaneous value of the voltage (U) with voltage-threshold values (+US, -US) lying symmetrically about the reference-voltage value (UO), and a time decision is made, in that the comparison results made during the amplitude decision are stored, and in that the current comparison result is logically combined with at least one comparison result determined in the previous bit periods and the value of the respective transmitted digital signal is recognized therefrom.

2. Circuit arrangement for carrying out the method according to Claim 1, in which the digital signal is applied to the input of an equalizer amplifier (EV), characterized in that the equalizer amplifier (EV) has a driver amplifier (TV) connected downstream whose output (EP) is connected to the input of a feedback amplifier (RV) and the output of the feedback amplifier (RV) is fed back via a sampling switch (AS) to a summing point (SP) at the input of the driver amplifier (TV), in that a control input of the sampling switch (AS) is connected to the output of a pulse shaper (IV) controlled by the bit-rate clock (T), in that the output of the driver amplifier (TV) is furthermore connected to a first comparator (KO1) and a second comparator (KO2) whose respective outputs are connected to a first flip-flop (FF1) and a second flip-flop (FF2) which are controlled by the bit-rate clock (T) and whose outputs are connected to the inputs of a logic circuit (LS), and in that the output of the logic circuit (LS) is connected to an at least one single-stage shift register (FF3, FF4), the outputs of the shift-register stages each being fed back to one input of the logic circuit (LS), and an output (A) of the shift register (A) is also the output of the circuit arrangement.

3. Method according to Claim 1, characterized in that the reference-voltage value (UO) lies in the centre of the dynamic range of the driver amplifier (TV).

4. Method according to Claim 1, characterized in that the duration of the clamping process and the duration of the time decision are negligibly small compared with the bit period.

5. Method according to Claim 1, characterized in that in the amplitude decision, one of three results occurs in each case, namely instantaneous value of the voltage (U) greater than the positive voltage-threshold value (+US), less than the negative voltage-threshold value (-US), or between the positive (+US) and negative (-US) voltage-threshold values.

6. Circuit arrangement according to Claim 2,
characterized in that the outputs of the shift-register stages (FF3, FF4) are each connected via a delay circuit (US1, US2) and a current divider (ST1, ST2) to the summing point (SP) at the input of the driver amplifier (TV).

## Revendications

1. Procédé pour régénérer des signaux numériques distordus et bruités dans des installations de transmission d'informations, sur lesquelles les signaux numériques sont soumis à la sortie d'un amplificateur de correction (EV), au point de reconnaissance (EP), à une décision d'amplitude par comparaison des signaux numériques avec des valeurs seuils de tension (+US, -US) fixes et à une décision de temps à des instants fixes (T1, T2, T3 ...) définis par un rythme binaire, caractérisé en ce que, après chaque décision d'amplitude et décision de temps, la valeur instantanée de la tension (U) au point de reconnaissance (EP) est bloquée sur une valeur de tension de référence définie (U0) et la variation de la tension dans le temps commence donc dans chaque période binaire à cette valeur de tension de référence (U0) et que, après l'expiration d'une période binaire, on prend une décision d'amplitude par comparaison de la valeur instantanée de la tension (U) avec des valeurs seuils de tension (+US, -US) symétriques par rapport à la valeur de tension de référence (U0) et une décision de temps, en ce que les résultats de la comparaison obtenus lors de la décision d'amplitude sont stockés et en ce que le résultat actuel de la comparaison est associé logiquement avec au moins un résultat de comparaison obtenu dans les périodes binaires antérieures et que la valeur du signal numérique envoyé à chaque fois est identifiée à partir de là.

2. Arrangement de circuit pour l'application du procédé selon la revendication 1, avec lequel le signal numérique est appliqué à l'entrée d'un amplificateur-égalisateur (EV), caractérisé en ce que l'amplificateur-égalisateur (EV) est suivi d'un amplificateur d'attaque (TV), dont la sortie (EP) est reliée à l'entrée d'un amplificateur de rétroaction (RV) et la sortie de l'amplificateur de rétroaction (RV) est ramenée via un interrupteur de balayage (AS) vers un point totalisateur (SP) à l'entrée de l'amplificateur d'attaque (TV) et qu'une entrée de commande de l'interrupteur de balayage (As) est branchée sur la sortie d'un formateur d'impulsions (IV) commandé par le rythme binaire (γ) et que la sortie de l'amplificateur d'attaque (TV) est également reliée à un premier comparateur (K01) et un deuxième comparateur (K02), dont la sortie respective est branchée sur un premier et un deuxième flip-flops (FF1, FF2) synchronisés par le rythme binaire (γ), dont les sorties sont reliées aux entrées d'un circuit logique (LS) et que la sortie du circuit logique (LS) est branchée sur un registre à décalage (FF3, FF4) avec au moins un étage, les sorties des étages du registre à décalage étant ramenées chacun à une entrée du circuit logique (LS) et une sortie du registre à décalage (A) est également une sortie de l'arrangement de circuit.

3. Procédé selon la revendication 1, caractérisé en ce que la valeur de tension de référence (U0) est au centre de la plage dynamique de l'amplificateur d'attaque (TV).

4. Procédé selon la revendication 1, caractérisé en ce que la durée de l'opération de blocage et la durée de la décision de temps sont négligeables par comparaison avec la période binaire.

5. Procédé selon la revendication 1, caractérisé en ce que, lors de la décision d'amplitude, il apparaît respectivement l'un des trois résultats, à savoir la valeur instantanée de la tension (U) supérieure à la valeur seuil positive de tension (+US), inférieure à la valeur seuil négative de tension (-US) ou entre la valeur seuil positive de tension (+US) et la valeur seuil négative de tension (-US).

6. Arrangement de circuit selon la revendication 2, caractérisé en ce que les sorties des étages du registre à décalage (FF3, FF4) sont reliées respectivement par un circuit de retard (VS1, VS2) et un circuit diviseur de courant (ST1, ST2) au point totalisateur (SP) à l'entrée de l'amplificateur d'attaque (TV).
